(19) Europäisches Patentamt
European Patent Office
Office européen des brevets

(11) **EP 1 915 806 B1**

## (12) EUROPÄISCHE PATENTSCHRIFT

(45) Veröffentlichungstag und Bekanntmachung des Hinweises auf die Patenterteilung:
**27.12.2017 Patentblatt 2017/52**

(21) Anmeldenummer: **06764179.5**

(22) Anmeldetag: **17.07.2006**

(51) Int Cl.:
***H02H 6/00*** *(2006.01)*  ***H02H 7/18*** *(2006.01)*
***B25F 5/00*** *(2006.01)*

(86) Internationale Anmeldenummer:
**PCT/EP2006/064319**

(87) Internationale Veröffentlichungsnummer:
**WO 2007/020146 (22.02.2007 Gazette 2007/08)**

(54) **VERFAHREN UND VORRICHTUNG FÜR EINE ÜBERLASTDETEKTION BEI HANDWERKZEUGEN**

METHOD AND DEVICE FOR DETECTING AN OVERLOAD IN HAND TOOLS

PROCÉDÉ ET DISPOSITIF DE DÉTECTION DE SURCHARGE POUR DES OUTILS À MAIN

(84) Benannte Vertragsstaaten:
**DE FR GB**

(30) Priorität: **12.08.2005 DE 102005038225**

(43) Veröffentlichungstag der Anmeldung:
**30.04.2008 Patentblatt 2008/18**

(73) Patentinhaber: **ROBERT BOSCH GMBH**
**70442 Stuttgart (DE)**

(72) Erfinder:
• **ROEHM, Heiko**
**70176 Stuttgart (DE)**
• **HIRSCHBURGER, Wolfgang**
**Thurston IP31 3QY (GB)**

(56) Entgegenhaltungen:
**EP-A- 1 496 589**   **GB-A- 2 101 430**
**US-B1- 6 172 860**

## Beschreibung

Die Erfindung betrifft ein Verfahren zur Detektion einer Überlastsituation bei einem Elektrohandwerkzeug mit einem Elektromotor gemäß dem Oberbegriff des Anspruchs 1, sowie eine entsprechende Vorrichtung gemäß dem Oberbegriff des Anspruchs 11.

Stand der Technik

Verfahren zur Detektion einer Überlastsituation bei einem Elektrohandwerkzeug mit einem Elektromotor sind aus dem Stand der Technik bekannt. Unter einem Elektrohandwerkzeug sind dabei beispielsweise Schrauber, Bohrschrauber, Kreissägen, Stichsägen, Elektrohobel, Bohrhämmer oder Schlagbohrmaschinen zu verstehen. Neben Elektrohandwerkzeugen, die mit Netzstrom betrieben werden, sind auch akkumulatorbetriebene Elektrohandwerkzeuge verfügbar. Für die nachfolgenden Betrachtungen soll in erster Linie auf akkumulatorbetriebene Elektrohandwerkzeuge eingegangen werden, wobei die Erläuterungen sinngemäß auch für netzstrombetriebene Elektrohandwerkzeuge gelten. Bei Elektrohandwerkzeugen kann die Situation eintreten, dass der Motor so stark belastet wird, dass er stehen bleibt. Im Stillstand stellt der Elektromotor gegenüber der Energiequelle aber fast nur noch einen geringen Ohmschen Widerstand dar, sodass sehr hohe Ströme fließen. Gegenüber einem Akkumulator verhält sich ein stillstehender Motor ähnlich wie ein Kurzschluss. Es ist außerdem zu beachten, dass bei stillstehendem Motor die Kühlung nicht mehr verfügbar ist, die Kühlung also gerade dann am geringsten ist, wenn die höchsten Ströme fließen. Wird auf diesen Zustand nicht reagiert, beispielsweise durch ein Abschalten, kann innerhalb von Sekunden ein thermisches Versagen von einer oder mehrerer Komponenten des Elektrohandwerkzeugs eintreten, beispielsweise von einer Verbindungsleitung, dem Elektromotor oder Lötverbindungen. Ein solches Versagen kann auch auftreten, wenn der blockierte Zustand mehrfach hintereinander auftritt, ohne dass ausreichende Abkühlphasen beachtet werden. Typischerweise wird bei akkumulatorbetriebenen Elektrohandwerkzeugen die thermische Widerstandsfähigkeit durch die Verwendung hochtemperaturfester beziehungsweise niederohmiger Bauteile gesteigert, wodurch allerdings lediglich der Zeitpunkt des thermischen Versagens verzögert wird. Alternativ kann eine analoge elektrische Abschaltung eingesetzt werden, die bei Erreichen eines bestimmten Stromniveaus den Stromkreis elektrisch trennt. Die hierzu notwendigen Bauteile sind aber teuer und können die Leistungsfähigkeit des Elektrohandwerkzeugs beeinträchtigen. Die Vorgabe fester Stromgrenzen bewirkt aber auch eine Abschaltung des Elektrohandwerkzeugs beim Auftreten kurzzeitiger Stromspitzen, obwohl diese vom Werkzeug toleriert würden. Schließlich sind Ausführungen bekannt, bei denen mittels eines NTC-Widerstands die Temperatur einer oder mehrerer kritischer Komponenten, zum Beispiel des Akkumulators, gemessen wird und bei Erreichen einer vorgegebenen Höchsttemperatur der Stromkreis elektrisch getrennt wird. Der Nachteil dieser Methode ist jedoch, dass beispielsweise durch eine geringe thermische Leitfähigkeit oder einer volumenmäßigen Ausdehnung der kritischen Komponente eine Zeitverzögerung zwischen dem Erreichen einer kritischen Temperatur und dem Erkennen dieser kritischen Temperatur besteht.

Verfahren und Vorrichtungen für die Detektion einer Überlastung in Handwerkzeugen sind aus US 6,172,860 und EP 1,496,589 bekannt.

Vorteile der Erfindung

Bei einem Verfahren zur Detektion einer Überlastsituation bei einem Elektrohandwerkzeug mit einem Elektromotor, insbesondere für ein akkumulatorbetriebenes Elektrohandwerkzeug, wobei ein Betriebsstrom des Elektromotors ermittelt wird, wird erfindungsgemäß vorgeschlagen, dass eine Differenz zwischen dem Wert des Betriebsstroms und mindestens einem gespeicherten Stromwert bestimmt wird und aus der Differenz auf eine thermische Überlastung des Elektrowerkzeugs geschlossen wird. Zunächst sei darauf hingewiesen, dass unter einer thermischen Überlastung des Elektrowerkzeugs nicht eine Überlastung des Werkzeugs in seiner Gesamtheit, sondern eine thermische Überlastung von einer oder mehrerer kritischer Komponenten des Werkzeugs zu verstehen ist, die erfahrungsgemäß oder bekanntermaßen hinsichtlich eines thermischen Versagens gefährdet sind. Zu den kritischen Komponenten, auf die sich die thermische Überlastung bezieht, zählen insbesondere ein Akkumulator, eine Akkumulatorzelle, ein Schalter oder der Elektromotor. Es ist demnach ein Ziel, eine Überlastsituation zu erkennen, bevor eine kritische Komponente thermisch beschädigt wird oder einen Defekt durch thermisches Versagen erleidet. Die Differenz als Grundlage zur Bestimmung der thermischen Belastung des Elektrowerkzeugs wird anhand des Betriebsstroms $I_B$ und des gespeicherten Stromwerts $I_G$ wie folgt bestimmt:

$$I_D = I_B - I_G \qquad (1)$$

Durch die Erfindung ist es möglich, bei und/oder vor Erreichen eines thermischen Limits eine Gegenmaßnahme, beispielsweise ein Abschalten des Werkzeugs, einzuleiten. Dabei wird der Strom mit seinem thermischen Äquivalent bewertet. Dies ermöglicht es, miniaturisierte und/oder günstige Bauteile zu verwenden, auch wenn diese für die tatsächlich möglichen (Kurzschluss-)Ströme nicht dauerfest sind. Dabei kann insbesondere vorgesehen werden, dass die Differenz nur gebildet wird, wenn der Betriebsstrom den gespeicherten Stromwert überschreitet. Dies minimiert den Rechenaufwand. Die Durchführung des vorgeschlagenen Verfahrens hat -wenn überhauptnur minimale Auswirkungen auf den Betrieb des Elektrohandwerkzeugs. Der gespeicherte Stromwert kann dabei insbesondere fest in der Hardware des Elektrohandwerkzeugs hinterlegt sein.

Vorteilhafterweise ist der gespeicherte Stromwert kleiner als ein maximaler Dauerstrom oder entspricht diesem. Unter dem maximalen Dauerstrom ist der Strom zu verstehen, bei dem das Werkzeug auf Dauer betrieben werden kann, ohne Schaden zu nehmen. Wenn also beispielsweise ein maximal zulässiger Dauerstrom von 15 A gewählt wird, bedeutet dies, dass beispielsweise eine komplette Akkumulatorladung bei einem Stromniveau von 15 A entladen werden kann. Eine überhöhte thermische Belastung wird also insbesondere nur dann berücksichtigt, wenn der Betriebsstrom diesen Dauerstrom überschreitet.

Bevorzugt wird die Differenz fortlaufend aufaddiert und wiederholt mit einem Systemparameter des Elektrohandwerkzeugs verglichen. Dadurch kann berücksichtigt werden, dass das Eintreten einer Überlastsituation sowohl vom Grad der thermischen Überlastung, also der Höhe der Differenz, als auch von der Zeitdauer dieser Überlastung, also wie viele Messungen einen zu hohen Strom gezeigt haben, abhängt. So lässt sich auch berücksichtigen, dass sich eine Überlastsituation innerhalb kurzer Zeit aufgrund einer großen Überlastung als auch über eine längere Zeit aufgrund einer geringeren Überlastung einstellen kann. Die Gegenmaßnahme auf die thermische Überlastung wird in diesem Fall eingeleitet, wenn die Summe größer oder gleich dem Systemparameter ist. Die Berechnung erfolgt unter Verwendung des Systemparameters z wie folgt:

$$\Sigma \, I_D \leq z \qquad (2)$$

Es ist außerdem bevorzugt, dass die Differenz vor der Addition mit einem systemabhängigen Exponenten potenziert wird. Es ergibt sich daraus die Formel:

$$\Sigma (I_D)^n \leq z \qquad (3)$$

Auf diese Weise kann berücksichtigt werden, dass eine große Differenz, also eine stärkere thermische Belastung, höher gewichtet wird, als eine kleine Differenz. Auf diese Weise können die tatsächlichen Gegebenheiten der thermischen Belastung besser abgebildet werden.

Es ist ferner bevorzugt, dass der Systemparameter für den Vergleich mit einem Faktor multipliziert wird. In diesem Faktor können beispielsweise die Anzahl der Messungen pro Zeiteinheit berücksichtigt werden. Bei schnell aufeinanderfolgenden Messungen wird man eine größere Anzahl an gemessenen hohen Strömen tolerieren können, als wenn die Messungen nur gelegentlich erfolgen, da bei einer größeren Anzahl an Messungen je Zeiteinheit auch für das Zeitintervall jeder Messung nur eine geringere Energie durchgeleitet wird. Bei Berücksichtigung des systemabhängigen Exponenten n sieht die entsprechende Formel dann wie folgt aus:

$$\Sigma (I_D)^n \leq z \bullet m \qquad (4)$$

Bei einer Weiterbildung der Erfindung wird die Summe beim Einschalten des Elektrohandwerkzeugs auf null gesetzt.

Vorteilhafterweise wird als Gegenmaßnahme auf die thermische Überlastung der Betriebsstrom reduziert oder unterbrochen. Durch diese Maßnahmen lässt sich auf einfache Weise einer Überlastsituation begegnen.

Außerdem ist es bevorzugt, dass bei der Zuordnung der Sollzeitdauer und/oder bei der Bestimmung des Systemparameters eine Betriebstemperatur des Elektrohandwerkzeugs, insbesondere beim Einschalten, berücksichtigt wird. Auch hier sei darauf hingewiesen, dass unter einer Betriebstemperatur des Elektrowerkzeugs nicht eine Temperatur des Werkzeugs in seiner Gesamtheit, sondern eine Temperatur einer oder mehrerer kritischer Komponenten des Werkzeugs zu verstehen ist. Eine solche Temperatur beim Einschalten kann insbesondere über einen temperaturabhängigen Widerstand gemessen werden, um so eine Eingangsgröße für die Berechnung des zulässigen Limits pro Einschaltvorgang zu erhalten. Der Widerstand fungiert dabei quasi als Gedächtnis für die thermische Vorgeschichte, sodass eine thermische Zerstörung auch bei wiederholtem Ein- und Ausschalten im blockierten Zustand verhindert werden kann. Um dies zu verdeutlichen, kann der Systemparameter als $z(T_0)$ dargestellt werden. Dabei ist $z(T_0)$ umso kleiner, je näher die Temperatur $T_0$ der mindestens einen kritischen Komponente, insbesondere beim Einschalten des Elektrohandwerkzeugs, bereits an ihrer Maximaltemperatur ist. Dabei kann $z(T_0)$ auch als Produkt eines vom Werkzeug abhängigen Grundparameters $z_S$ und einer Temperaturkompensation $z_T(T_0)$ dargestellt werden:

$$z(T_0) = z_S \bullet z_T(T_0) \qquad (4)$$

$z_T(T_0)$ ist null, wenn die kritische Komponente bereits ihre zulässige Maximaltemperatur hat oder z.B. 5°C unter der zulässigen Maximaltemperatur ist. $z_T(T_0)$ ist eins, wenn das Temperaturniveau vorliegt, bei dem $z_S$ definiert wurde. Liegt die Temperatur der kritischen Komponente zwischen dem genannten Temperaturniveau und der zulässigen Maximaltemperatur, so wird $z_T(T_0)$ zwischen null und eins gewählt.

Gemäß einer Weiterbildung der Erfindung wird der thermischen

Überlastung eine maximale Sollzeitdauer zugeordnet:

$$t_a = z / (I_D)^n \qquad (5)$$

Dabei ist z ein von der Ausführung und Art des Elektrohandwerkzeugs abhängiger Systemparameter und n ein systemabhängiger Exponent, insbesondere mit $1 \leq n \leq 3$. Der systemabhängige Exponent n wird dabei je nach den tatsächlichen Gegebenheiten gewählt. Der Exponent n repräsentiert die thermische Charakteristik der kritischen Komponente. Je stärker sich eine Überschreitung des gespeicherten Stromwerts in einer thermischen Überlastung des Elektrowerkzeugs äußert, desto höher wird dieser Exponent gewählt. Dabei lassen sich z und n insbesondere experimentell abschätzen. Es werden für die kritische Komponente Messungen durchgeführt, in denen ermittelt wird, innerhalb welcher Zeit bei welchem konstanten Stromniveau die Komponente ihre maximal zulässige Temperatur erreicht. Anhand von verschiedenen Messpunkten, insbesondere drei Messpunkten, lassen sich dann die Parameter n (zum Beispiel 3) und z (zum Beispiel 4096 sA$^n$) abschätzen oder errechnen.

Mit Vorteil ist die Zuordnung von thermischer Überlastung und Sollzeitdauer als Kennlinie hinterlegt. Dies ermöglicht eine besonders flexible Verarbeitung. Es sei darauf hingewiesen, dass die Kennlinie nicht expliziert anhand von Werten oder einer Wertetabelle abgelegt sein muss, sondern auch anhand einer mathematischen Funktion mit spezifischen Parametern bestimmt sein kann.

Gemäß einer Weiterbildung der Erfindung ist die Kennlinie hyperbelförmig. Eine derartige Kennlinie ist nach Erkenntnissen der Anmelderin für die genannte Zuordnung besonders geeignet.

Die Erfindung betrifft ferner eine Überwachungsvorrichtung für ein Elektrowerkzeug mit einem Elektromotor, insbesondere für ein akkumulatorbetriebenes Elektrowerkzeug, zur Detektion einer Überlastsituation, mit einer einen Betriebsstrom des Elektromotors ermittelnden Strommesseinrichtung, wobei die Überwachungseinrichtung ferner eine eine Differenz zwischen dem Betriebsstrom und mindestens einem gespeicherten Stromwert berechnende und daraus auf eine thermische Überlastung schließende Logikeinrichtung aufweist. Die Logikeinrichtung ist insbesondere als digitaler Controller ausgebildet.

Zeichnungen

Die Erfindung wird nachfolgend anhand von Ausführungsbeispielen näher erläutert. Es zeigen

Figur 1 ein symbolisch dargestelltes Ausführungsbeispiel eines Elektrohandwerkzeugs mit einer Überwachungsvorrichtung, und

Figur 2 ein Ausführungsbeispiel eines funktionalen Zusammenhangs für die thermische Überlastung und die maximale Sollzeitdauer.

Beschreibung der Ausführungsbeispiele

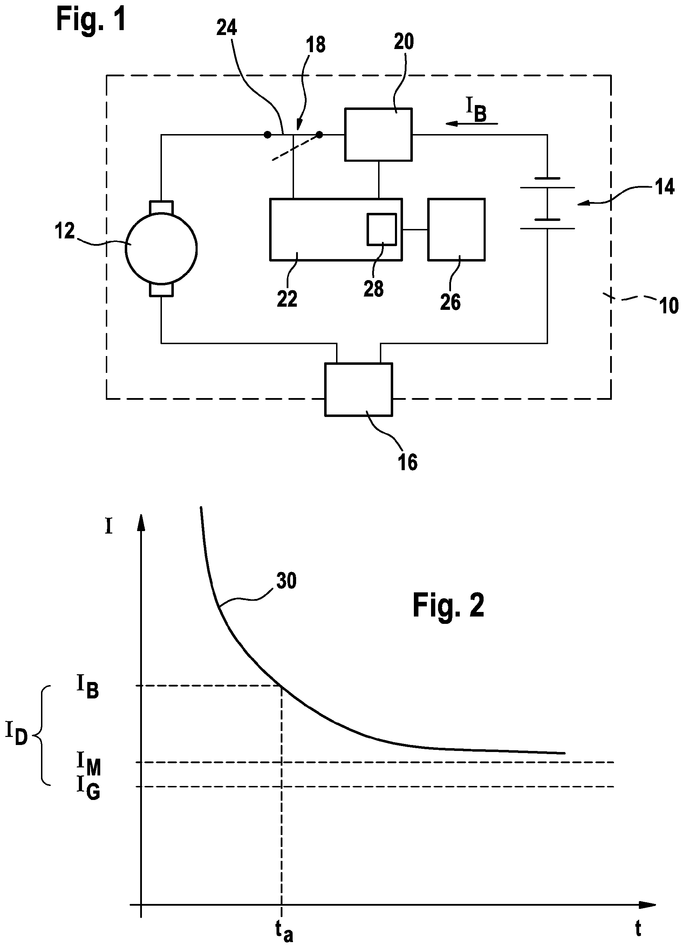

Figur 1 zeigt ein Elektrohandwerkzeug 10 mit einem Elektromotor 12, wobei das Elektrohandwerkzeug 10 aus einem Akkumulator 14 gespeist wird. Ausgehend vom Akkumulator 14 sind in dem Stromkreis ein Bedienelement 16, der Elektromotor 12, eine Unterbrechungsvorrichtung 18 und eine Strommesseinrichtung 20 angeordnet. Die Unterbrechungsvorrichtung 18 wird von einer Überwachungsvorrichtung 22 angesteuert. Die Unterbrechungsvorrichtung 18 weist einen Schalter 24 auf (auch eine Ausführung als Halbleiterbauelement ist möglich), der im Regelfall geschlossen ist, bei Bedarf aber von der Überwachungsvorrichtung 22 geöffnet werden kann. Die geöffnete Position des Schalters 24 ist mittels einer gestrichelten Linie angedeutet. Schließlich ist dem Akkumulator 14 eine Temperaturmesseinrichtung 26 zugeordnet, die die Temperatur des Akkumulators 14 erfasst. In der Überwachungsvorrichtung 22 ist mindestens ein Stromwert gespeichert, der in diesem Fall hardwaremäßig fest hinterlegt ist.

Beim Einschalten des Elektrohandwerkzeugs 10 wird die genannte Summe $\Sigma(I_D)^n$ zunächst auf null gesetzt. Während des normalen Betriebs steuert der Benutzer das Elektrohandwerkzeug 10 mittels des Bedienelements 16, indem er die Leistungsabgabe vom Akkumulator 14 an den Elektromotor 12 beeinflusst (dieser Vorgang ist aus dem Stand der Technik bekannt und daher lediglich schematisch dargestellt). Während des Betriebs wird von der Strommesseinrichtung 20 der Betriebsstrom $I_B$ wiederholt gemessen. Tritt nun der Fall ein, dass der Betriebsstrom $I_B$, der gespeicherten Stromwert $I_G$ überschreitet, so wird die Summe gemäß der zuvor genannten Formel (4) erhöht. Dabei wird hier als Systemparameter $z(T_0)$ verwendet, wobei die Temperatur $T_0$ beim Einschalten von der Temperaturmesseinrichtung 26 ermittelt wurde. Während dieser Überlastsituation erhöht sich die Summe stetig und wird immer wieder mit dem Wert $z \cdot m$ verglichen. Wird dieser Wert von der Summe überschritten, so wird der Stromkreis durch ein Signal von der Überwachungsvorrichtung 22 mittels der Unterbrechungsvorrichtung 18 unterbrochen. Das Elektrowerkzeug 10, beziehungsweise hier die kritische Komponente in Form des Akkumulators 14, wird so vor einer thermischen Beschädigung beziehungsweise einem thermischen Versagen geschützt.

Alternativ können, wie zuvor beschrieben, auch eine Vielzahl an Messungen durchgeführt werden, insbesondere mehr als 100 Messungen pro Sekunde. Der Systemparameter $z(T_0)$ wird dann beispielsweise mit der Anzahl der Messungen pro Sekunde multipliziert, um so der hohen Anzahl an Messungen und damit einem verringerten Einfluss einer einzelnen Messung Rechnung zu tragen.

Figur 2 zeigt den Verlauf einer beispielhaften Kennlinie 30, die experimentell ermittelt wurde und für die Bestimmung der Parameter z und n verwendet wurde. Dabei ist entlang der Abszisse die Zeit t für die Sollzeitdauer $t_a$ und entlang der Ordinate der Strom I für den im Stromkreis fließenden Strom $I_B$. Zur Orientierung sind der mindestens eine gespeicherte Stromwert $I_G$ und der maximale Dauerstrom $I_M$ abgetragen. Es ist dabei deutlich zu erkennen, dass für einen gemessenen Betriebsstrom $I_B$ eine entsprechende maximale Sollzeitdauer $t_a$ ermittelt werden kann. Aus der Darstellung ist deutlich zu erkennen, dass das vorgeschlagene Verfahren Stromspitzen toleriert, da auch große Überschreitungen des gespeicherten Stromwerts $I_G$ zumindest kurzfristig erlaubt werden. Andererseits ist zu erkennen, dass geringfügigen Überschreitungen des gespeicherten Stromwerts $I_G$ eine große Sollzeitdauer $t_a$ zugeordnet ist. Dadurch wird sichergestellt, dass bei geringfügigen Überschreitungen nicht eine zu frühe Abschaltung erfolgt.

**Patentansprüche**

1. Verfahren zur Detektion einer Überlastsituation bei einem akkumulatorbetriebenen Elektrohandwerkzeug (10) mit einem Elektromotor (12), wobei ein Betriebsstrom ($I_B$) des Elektromotors (12) ermittelt wird, eine Differenz ($I_D$) zwischen dem Wert des Betriebsstroms ($I_B$) und mindestens einem gespeicherten Stromwert ($I_G$) bestimmt wird, aus der Differenz ($I_D$) auf eine thermische Überlastung des Elektrowerkzeugs (10) geschlossen wird, und der thermischen Überlastung eine maximale Sollzeitdauer ($t_a$) zugeordnet wird, **dadurch gekennzeichnet, dass** bei der Zuordnung der maximalen Sollzeitdauer ($t_a$) eine Betriebstemperatur ($T_0$) des Elektrohandwerkzeugs (10) beim Einschalten derart berücksichtigt wird, dass die Zuordnung von thermischer Überlastung und maximaler Sollzeitdauer ($t_a$) als hyperbelförmige Kennlinie (30) hinterlegt ist, wobei geringfügigen Überschreitungen des gespeicherten Stromwerts ($I_G$) eine große maximale Sollzeitdauer ($t_a$) zugeordnet ist.

2. Verfahren nach Anspruch 1, **dadurch gekennzeichnet, dass** der gespeicherte Stromwert ($I_G$) kleiner ist als ein maximaler Dauerstrom ($I_M$) oder diesem entspricht.

3. Verfahren nach einem der vorhergehenden Ansprüche, **dadurch gekennzeichnet, dass** die Differenz ($I_D$) fortlaufend aufaddiert und wiederholt mit einem Systemparameter (z) des Elektrohandwerkzeugs verglichen wird.

4. Verfahren nach Anspruch 3, **dadurch gekennzeichnet, dass** die Differenz ($I_D$) vor der Addition mit einem systemabhängigen Exponenten (n) potenziert wird.

5. Verfahren nach Anspruch 3 oder 4, **dadurch gekennzeichnet, dass** der Systemparameter (z) für den Vergleich mit einem Faktor multipliziert wird.

6. Verfahren nach einem der Ansprüche 3, 4 oder 5, **dadurch gekennzeichnet, dass** die Summe beim Einschalten des Elektrohandwerkzeugs auf null gesetzt wird.

7. Verfahren nach einem der vorhergehenden Ansprüche, **dadurch gekennzeichnet, dass** der Betriebsstrom ($I_B$) als Gegenmaßnahme auf die thermische Überlastung reduziert oder unterbrochen wird.

8. Verfahren nach einem der vorhergehenden Ansprüche, **dadurch gekennzeichnet, dass** bei der Bestimmung des Systemparameters (z) die Betriebstemperatur ($T_0$) des Elektrohandwerkzeugs (10) beim Einschalten berücksichtigt wird.

9. Überwachungsvorrichtung (22) für ein akkumulatorbetriebenes Elektrohandwerkzeug (10) mit einem Elektromotor (12) zur Detektion einer Überlastsituation, mit einer einen Betriebsstrom ($I_B$) des Elektromotors (12) ermittelnden Strommesseinrichtung (20), wobei die Überwachungsvorrichtung (22) ferner eine eine Differenz ($I_D$) zwischen dem Betriebsstrom ($I_B$) und mindestens einem gespeicherten Stromwert ($I_G$) berechnende und daraus auf eine thermische Überlastung schließende Logikeinrichtung (28) aufweist, **dadurch gekennzeichnet, dass** die Logikeinrichtung (28) einer maximalen Sollzeitdauer ($t_a$) eine von einer Temperaturmesseinrichtung (26) ermittelte Betriebstemperatur ($T_0$) des Elektrohandwerkzeugs (10) beim Einschalten derart zuordnet, dass die Zuordnung von thermischer Überlastung und maximaler Sollzeitdauer ($t_a$) als hyperbelförmige Kennlinie (30) hinterlegt ist, wobei geringfügigen Überschreitungen des gespeicherten Stromwerts ($I_G$) eine große maximale Sollzeitdauer ($t_a$) zugeordnet ist.

10. Überwachungsvorrichtung nach Anspruch 12, **dadurch gekennzeichnet, dass** die Logikeinrichtung (28) als digitaler Controller ausgebildet ist.

**Claims**

1. Method for detecting an overload situation in a battery-operated hand-held power tool (10) with an electric motor (12), wherein an operating current ($I_B$) of the electric motor (12) is determined, a difference

$(I_D)$ between the value of the operating current $(I_B)$ and at least one stored current value $(I_G)$ is determined, a thermal overload of the power tool (10) is deduced from the difference $(I_D)$ and the thermal overload is assigned a maximum desired time period $(t_a)$, **characterized in that** in the assignment of the maximum desired time period $(t_a)$ an operating temperature $(T_0)$ of the hand-held power tool (10) during switching on is taken into account in such a way that the assignment of the thermal overload and the maximum desired time period $(t_a)$ is stored as a hyperbolic characteristic (30), wherein slight exceedances of the stored current value $(I_G)$ are assigned a great maximum desired time period $(t_a)$.

2. Method according to Claim 1, **characterized in that** the stored current value $(I_G)$ is less than or corresponds to a maximum continuous current $(I_M)$.

3. Method according to one of the preceding claims, **characterized in that** the difference $(I_D)$ is continuously added and repeatedly compared with a system parameter (z) of the hand-held power tool.

4. Method according to Claim 3, **characterized in that**, before the addition, the difference $(I_D)$ is raised to the power of a system-dependent exponent (n).

5. Method according to Claim 3 or 4, **characterized in that** the system parameter (z) is multiplied by a factor for the comparison.

6. Method according to one of Claims 3, 4 or 5, **characterized in that** the sum is set to zero when the hand-held power tool is switched on.

7. Method according to one of the preceding claims, **characterized in that** the operating current $(I_B)$ is reduced or interrupted as a countermeasure as a response to the thermal overload.

8. Method according to one of the preceding claims, **characterized in that** the operating temperature $(T_0)$ of the hand-held power tool (10) during switching on is taken into account in the determination of the system parameter (z).

9. Monitoring device (22) for a battery-operated hand-held power tool (10) with an electric motor (12) for detecting an overload situation, with a current measuring device (20) that determines an operating current $(I_B)$ of the electric motor (12), wherein the monitoring device (22) also has a logic device (28) that calculates a difference $(I_D)$ between the operating current $(I_B)$ and at least one stored current value $(I_G)$ and determines from it whether a thermal overload is occurring, **characterized in that** the logic device (28) assigns a maximum desired time period $(t_a)$ an

operating temperature $(T_0)$ of the hand-held power tool (10) during switching on, which is determined by a temperature measuring device (26), in such a way that the assignment of the thermal overload and the maximum desired time period $(t_a)$ is stored as a hyperbolic characteristic (30), wherein slight exceedances of the stored current value $(I_G)$ are assigned a great maximum desired time period $(t_a)$.

10. Monitoring device according to Claim 12, **characterized in that** the logic device (28) is formed as a digital controller.

**Revendications**

1. Procédé pour détecter une situation de surcharge dans un outil électrique portatif fonctionnant sur accumulateur (10) comportant un moteur électrique (12), dans lequel un courant de fonctionnement $(I_B)$ du moteur électrique (12) est déterminé, une différence $(I_D)$ entre la valeur du courant de fonctionnement $(I_B)$ et au moins une valeur de courant stockée $(I_G)$ est déterminée, une surcharge thermique de l'outil électrique (10) est déduite à partir de la différence $(I_D)$ et une période de temps théorique maximale $(t_a)$ est associée à la surcharge thermique, **caractérisé en ce que**, lors de l'association à la période de temps théorique maximale $(t_a)$, une température de fonctionnement $(T_0)$ de l'outil électrique portatif (10) est prise en compte lors de la mise en marche, de manière à ce que l'association entre la surcharge thermique et la période de temps théorique maximale $(t_a)$ soit stockée sous la forme d'une courbe caractéristique parabolique (30), dans lequel une grande période de temps théorique maximale $(t_a)$ est associée aux faibles dépassements de la valeur de courant stockée $(I_G)$.

2. Procédé selon la revendication 1, **caractérisé en ce que** la valeur de courant stockée $(I_G)$ est inférieure à un courant permanent maximal $(I_M)$ ou correspond à celui-ci.

3. Procédé selon l'une quelconque des revendications précédentes, **caractérisé en ce que** la différence $(I_D)$ est additionnée en continu et est comparée de manière répétée à un paramètre système (z) de l'outil électrique portatif.

4. Procédé selon la revendication 3, **caractérisé en ce que**, avant l'addition, la différence $(I_D)$ est élevée à une puissance égale à un exposant dépendant du système (n).

5. Procédé selon la revendication 3 ou 4, **caractérisé en ce que** le paramètre système (z) est multiplié par un facteur aux fins de la comparaison.

**6.** Procédé selon l'une quelconque des revendications 3, 4 ou 5, **caractérisé en ce que** la somme est mise à zéro lors de la mise en marche de l'outil électrique portatif.

**7.** Procédé selon l'une quelconque des revendications précédentes, **caractérisé en ce que** le courant de fonctionnement ($I_B$) est réduit ou interrompu en tant que contremesure contre la surcharge thermique.

**8.** Procédé selon l'une quelconque des revendications précédentes, **caractérisé en ce que** la température de fonctionnement ($T_0$) de l'outil électrique portatif (10) est prise en compte lors de la mise en marche pour déterminer le paramètre système (z).

**9.** Dispositif de surveillance (22) destiné à un outil électrique portatif fonctionnant sur accumulateur (10) doté d'un moteur électrique (12), destiné à détecter une situation de surcharge, comportant un dispositif de mesure de courant (20) déterminant un courant de fonctionnement ($I_B$) du moteur électrique (12), dans lequel le dispositif de surveillance (22) comporte en outre un dispositif logique (28) calculant une différence ($I_D$) entre le courant de fonctionnement ($I_B$) et au moins une valeur de courant stockée ($I_G$) et déduisant une surcharge thermique à partir de celle-ci, **caractérisé en ce que** le dispositif logique (28) associe une période de temps théorique maximale ($t_a$) une température de fonctionnement ($T_0$) de l'outil électrique portatif (10) déterminée par un dispositif de mesure de température (26) lors de la mise en marche, de manière à ce que l'association entre la surcharge thermique et la période de temps théorique maximale ($t_a$) soit stockée sous la forme d'une courbe caractéristique parabolique (30), dans lequel une grande période de temps théorique maximale ($t_a$) est associée aux faibles dépassements de la valeur de courant stockée ($I_G$).

**10.** Dispositif de surveillance selon la revendication 12, **caractérisé en ce que** le dispositif logique (28) est réalisé sous forme de contrôleur numérique.

**Fig. 1**

**Fig. 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6172860 B
- EP 1496589 A